# EUROPÄISCHE PATENTSCHRIFT

(11) **EP 0 975 506 B1**
(45) Veröffentlichungstag und Bekanntmachung des Hinweises auf die Patenterteilung: **17.10.2001**
(21) Anmeldenummer: 97922848.3
(22) Anmeldetag: 17.04.1997
(51) Int. Cl.: B62B 9/20

(54) **GELENK FÜR DEN SCHIEBEGRIFF EINES KLEINFAHRZEUGES**
HINGE FOR HANDLE OF A SMALL VEHICLE
ARTICULATION POUR LE GUIDON D'UN PETIT VEHICULE

(43) Veröffentlichungstag der Anmeldung: 02.02.2000
(73) Patentinhaber: Tolges Kunststoffverarbeitung GmbH & Co. KG, 34414 Warburg (DE)
(72) Erfinder: TOLGES, Peter, D-34414 Warburg (DE)
(74) Vertreter: WALTHER, WALTHER & HINZ Patentanwälte
(86) Internationale Anmeldenummer: DE9700779
(87) Internationale Veröffentlichungsnummer: WO9847753

(56) Entgegenhaltungen:
- EP-A- 0 494 701

## Beschreibung

Die Erfindung betrifft ein Gelenk für den Schiebegriff eines Kleinfahrzeuges, insbesondere eines Kinderwagens, Rasenmähers und ähnlichem, wobei das Gelenk zwei Gelenkansätze zur Verbindung einerseits mit dem Rahmen des Kleinfahrzeugs und andererseits mit dem Schiebegriff aufweist, wobei das Gelenk ein Gehäuse mit einer Verstelleinrichtung zeigt, durch die die Gelenkansätze in unterschiedlichen Stellungen zueinander rastbar fixierbar sind.

Ein Gelenk der eingangs genannten Art ist bekannt; es dient insbesondere bei der Anbringung an Kinderwagen dazu, den Einstellwinkel des Schiebegriffs relativ zum Rahmen derart zu verändern, daß ein solcher Kinderwagen auch für unterschiedlich große Personen bequem zu schieben ist.

Es sind nun allerdings auch Kinderwagen bekannt, die einen nicht verstellbaren Schiebegriff aufweisen. Bei diesen Kinderwagen ist allerdings ein Bowdenzug vorgesehen, der von einem am Schiebegriff angeordneten Handhebel bis zu einem entsprechenden Gelenk im Rahmen des Kinderwagens verläuft, um vom Schiebegriff aus das Gelenk des Kinderwagens zu entarretieren, mit dem Ziel, des Zusammenlegens des Kinderwagens, Die Anordnung eines derartigen Bowdenzuges bei einem Kinderwagen mit einem Gelenk. im Bereich des Schiebegriffes ist naturgemäß deswegen nicht möglich, da bei einem Verschwenken des Schiebegriffes immer auch notwendigerweise die Länge des Bowdenzuges verändert wird, so daß zwangsweise, je nach dem in welche Richtung der Schiebegriff verschwenkt wird, eine Entarretierung des mit dem Bowdenzug verbundenen Gelenks erfolgt.

Der Erfindung liegt daher die Aufgabe zugrunde ein Gelenk für den Schiebegriff eines Kleinfahrzeuges der eingangs genannten Art bereit zu stellen, wobei dennoch ein Bowdenzug wie oben beschrieben zum Einsatz gefangen kann, ohne daß bei Verstellung bzw. Verschwenkung des Schiebegriffes zwangsweise eine Betätigung des Bowdenzuges erfolgt.

Die Aufgabe wird erfindungsgemäß durch ein Gelenk gelöst, bei dem der Bowdenzug zentrisch in dem Gelenk geführt ist, und dessen Enden jeweils bei einem Gelenkansatz aus dem Gehäuse ragen. Durch eine derartige zentrische Führung des Bowdenzuges im Gelenk, das heißt, einer Führung des Bowdenzuges im Bereich der neutralen Achse des Gelenkes wird erreicht, daß der Schiebegriff beliebig verschwenkbar ist, ohne daß eine Verkürzung beziehungsweise Verlängerung des am Schiebegriff angeordneten Bowdenzuges stattfindet. Das heißt, daß der Bowdenzug in . jeder beliebigen Stellung des Schiebegriffes betätigbar ist.

Im Weiteren ist vorgesehen, daß das Gehäuse zwei Gehäuseteile aufweist, wobei jeder Gelenkansatz zur Anbringung entweder am Schiebegriff beziehungsweise am Rahmen des Kleinfahrzeuges, mit einem Gehäuseteil verbindbar ist. Konstruktiv ist weiterhin vorgesehen,. daß jedes Gehäuseteil im Bereich des Gelenkansatzes eine Öffnung für den Durchlaß des Bowdenzuges aufweist. Um den Bowdenzug in der Verstelleinrichtung, das heißt, im Gelenk sicher führen zu können, zeigt die Verstelleinrichtung eine Führungshülse für den Bowdenzug. Hierbei ist die Führungshülse parallel und zentrisch zur Drehachse des Gelenks im Gelenk angeordnet.

Nach einem besonderen Merkmal der Erfindung weisen die Gehäuseteile jeweils eine Innenverzahnung unterschiedlichen Druchmessers auf, wobei die Verstelleinrichtung zur Kupplung der beiden Gehäuseteile ein Kuppelglied zeigt, wobei das Kuppelglied parallel zur Drehachse des Gelenks derart verschieblich ist, daß in einer ersten Stellung die beiden Gehäuseteile miteinander formschlüssig verbindbar sind und in einer zweiten Stellung die beiden Gehäuseteile relativ zueinander verdrehbar sind. Das heißt, daß der Schiebegriff in verschiedenen Stellungen relativ zu dem Gestell oder Rahmen des Kleinfahrzeuges fixierbar ist. Konstruktiv ist hierbei weiterhin vorgesehen, daß das Kuppelglied zwei Zahnkränze unterschiedlichen Durchmessers aufweist, wobei der Durchmesser der Zahnkränze mit dem jeweiligen Durchmesser der Innenverzahnung der Gehäuseteile korrespondiert. Hierdurch wird erreicht, daß einer der Zähnkränze des Kuppelgliedes. kontinuierlich mit der einen Innenverzahnung des einen Gehäuseteiles in formschlüssiger Verbindung steht, jedoch der andere Zahnkranz wahlweise in beziehungsweise außer Eingriff mit den Innenverzahnung des anderen Gehäuseteiles gebracht werden kann.

Hierbei ist nach einem besonderen Merkmal der Erfindung vorgesehen, daß die Verzahnung der Zahnkränze des Kuppelgliedes. und korrespondierend hierzu die Innenverzahnung der Gehäuseteile Zähne mit parallel zueinander verlaufenden Zahnflanken aufweist. Bei konisch zulaufenden Zahnflanken ergibt sich beim Kämmen der Zähne miteinander sowohl eine Kraftkomponente in senkrechter Richtung auf die Zahnflanke als auch eine Kraftkomponente in Richtung auf die Zahnspitze zu. Da das erfindungsgemäße Gelenk aus Kunststoff gefertigt ist, führt diese Kraftkomponente in Richtung auf die Zahnspitze dazu, daß der entsprechende Gehäuseteil eine Dehnung in Umfangsrichtung erfährt. Das Gehäuseteil wird sich also bei entsprechender Belastung. verziehen. Dies führt schlußendlich dazu, daß der Zahnkranz des Kuppelgliedes nicht mehr sauber von der Innenverzahnung des Gehäuseteiles aufgenommen wird.

Durch Zähne mit parallelen Zahnflanken hingegen wird selbst bei großer Belastung keine Kraftkomponente auf das Gehäuseteil wirksam. Es gibt demzufolge keinen Verzug des Gehäuseteiles.

Die Verstelleinrichtung zeigt ein in dem einen Gehäuseteil angeordnetes Bodenelement, wobei das. Bodenelement eine Schnapphülse zur Verbindung mit dem anderen Gehäuseteil besitzt, wobei das Kuppelglied durch die Schnapphülse verschieblich führbar ist. Darüber hinaus dient die Schnapphülse sowohl der Führung einer Feder, die zwischen Bodenelement und Kuppelglied vorgesehen ist, als auch der Führung des Kuppelgliedes selbst. Das heißt, daß die Schnapphülse, die am Bodenelement angeordnet ist mehrere Aufgaben besitzt; zum einen verbindet sie die beiden Gehäusehälften miteinander, und zum anderen dient sie der Führung sowohl einer Feder, als auch der Führung des Kuppelgliedes. Um das Bodenelement im Gehäuse zu fixieren, zeigt das eine Gehäuseteil einen Deckel. Hierbei ist der Deckel vorteilhaft klemmbar und damit lösbar in dem einen Gehäuseteil angeordnet.

Das andere. Gehäuseteil zeigt vorteilhaft einen Bodenkranz, wobei der Bodenkranz mindestens eine Öffnung aufweist, und wobei dieses andere Gehäuseteil einen Druckknopf besitzt der mindestens einen Druckstift zeigt, der durch die Öffnung im Bodenkranz das Kuppelglied entgegen der Kraft der Feder außer Eingriff mit der Innenverzahnung des anderen Gehäuseteiles bringt. Hieraus wird deutlich, daß bei Betätigung des Druckknopfes die beiden Gehäuseteile relativ zueinander verschwenkbar sind, da in diesem Fall der eine Zahnkranz des Kuppelgliedes außer Eingriff mit der einen Innenverzahnung des anderen Gehäuseteiles bringbar ist, wobei bei Loslassen des Druckknopfes aufgrund der Federkraft, unter der das Kuppelglied steht, dieses Kuppelglied mit dem entsprechenden Zahnkranz in die Innenvenahnung des anderen Gehäuseteiles einrastet.

Nach einem besonderen Merkmal der Erfindung ist vorgesehen, daß die Schnapphülse die Führungshülse für den Bowdenzug klemmend und. vorzugsweise verdrehsicher aufnimmt, um dauerhaft eine gute Führung des Bowdenzuges in der neutralen Achse, das heißt, in der zentralen Drehachse des Gelenkes zu gewährleisten.

Gegenstand der Erfindung ist ebenfalls ein Kleinfahrzeug, zum Beispiel ein Kinderwagen oder ein Rasenmäher, der sich durch ein Gelenk gemäß einem oder mehrerer der vorstehend abgehandelten Ansprüche auszeichnet.

Anhand der Zeichnungen wird die Erfindung nachstehend beispielhaft näher erläutert.

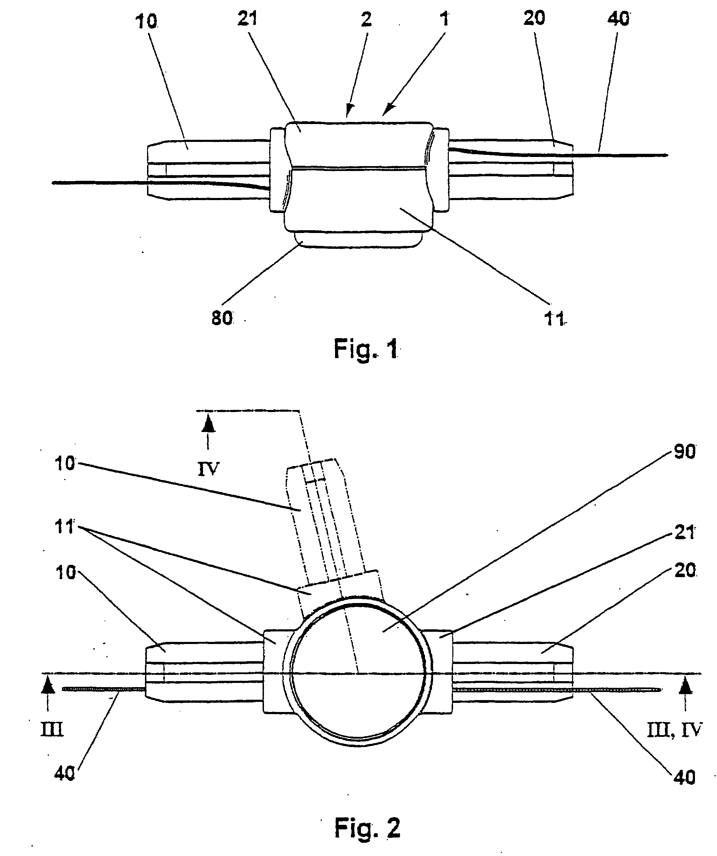

- Figur 1: zeigt das Gelenk in einer Draufsicht;
- Figur 2: zeigt das Gelenk in einer Seitenansicht;

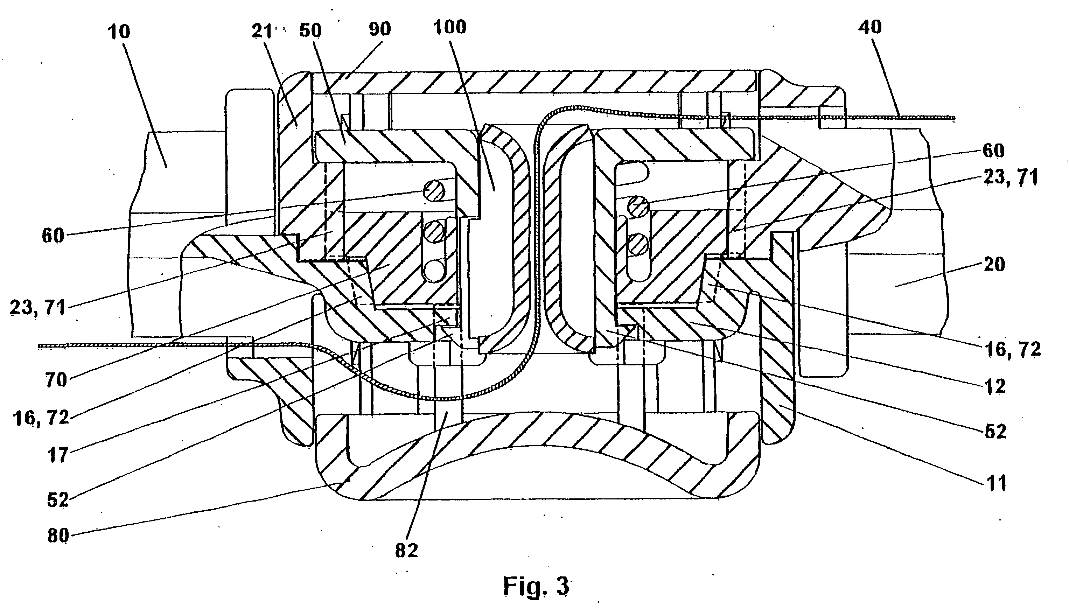

- Figur 3: zeigt einen Schnitt gemäß der Linie III - III aus Figur 2;

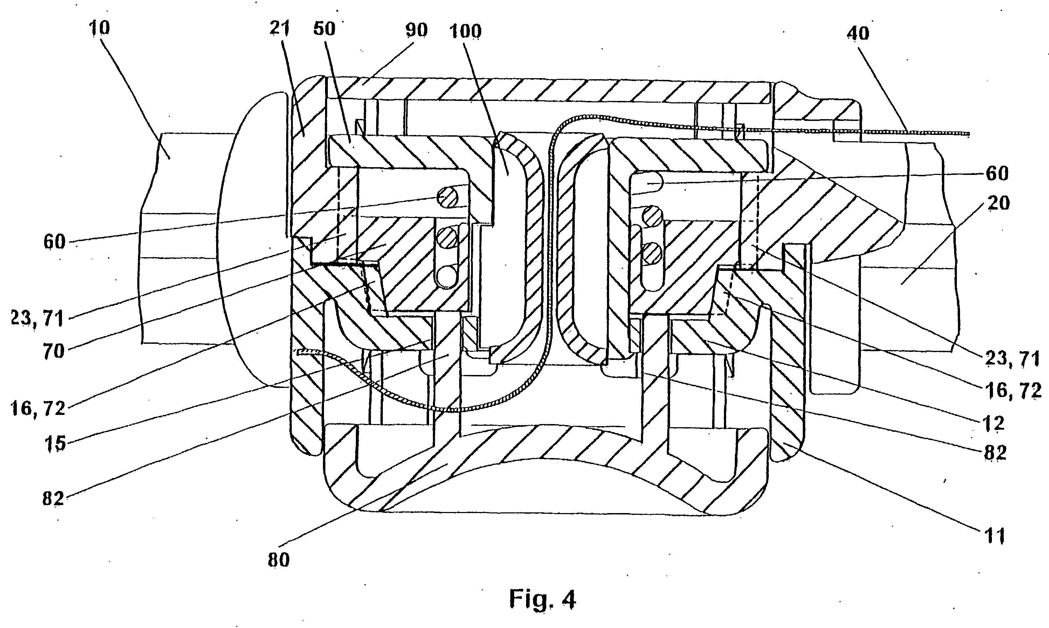

- Figur 4: zeigt einen Schnitt gemäß der Linie IV - IV aus Figur 2;
- Figur 5: zeigt eine explosionsartige Darstellung der einzelnen Bauteile des Gelenkes;

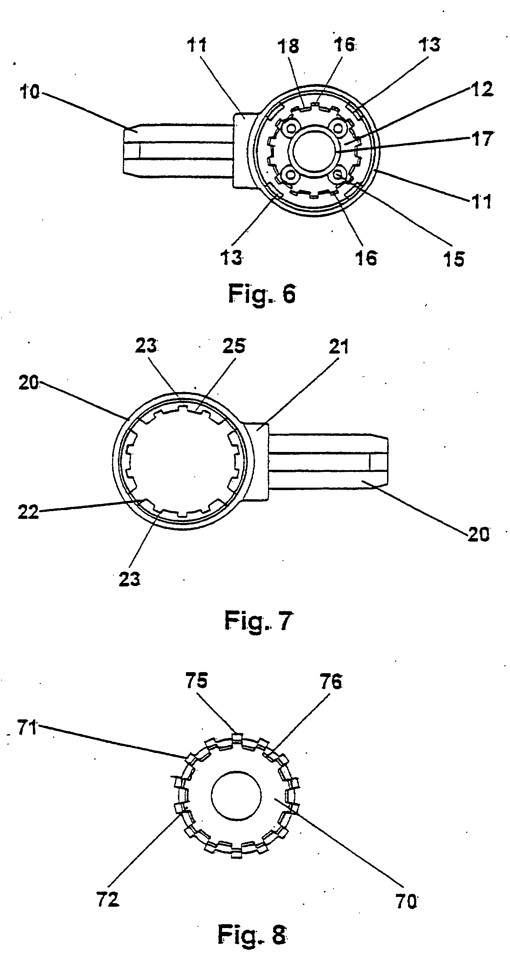

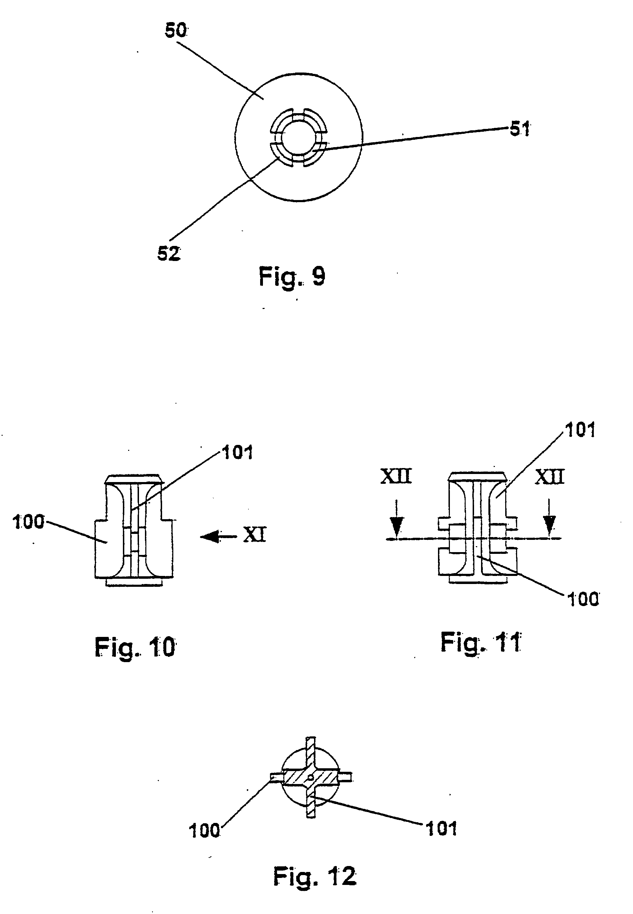

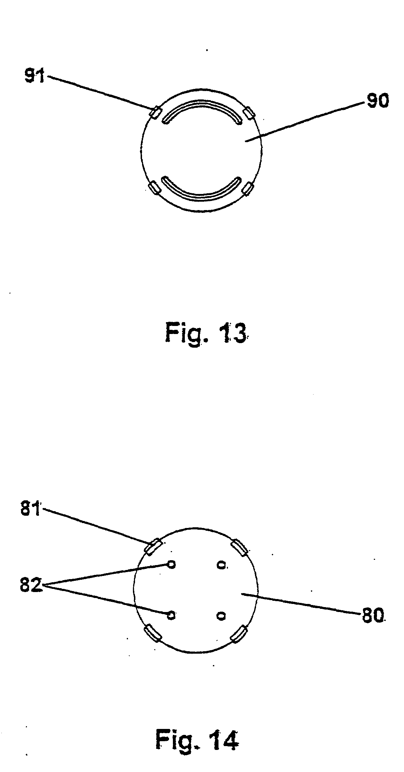

- Figur 6-14: zeigen die einzelnen Bauteile gemäß der Linien VI - XIX aus Figur 5.

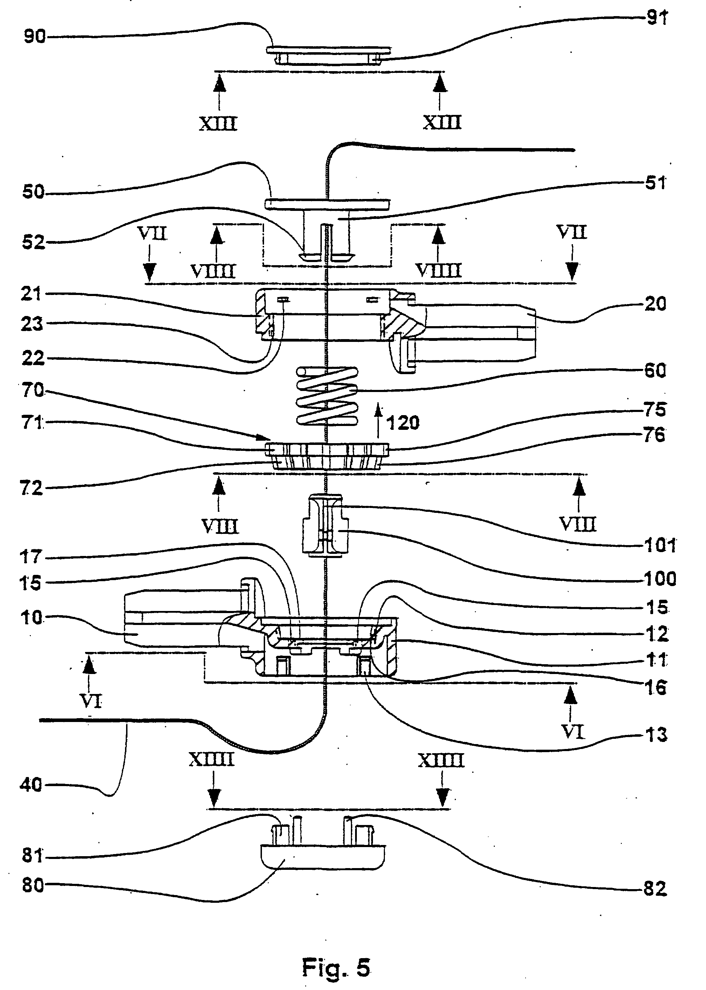

Das insgesamt mit 1 bezeichnete Gelenk zeigt ein Gehäuse 2, umfassend die beiden Gehäuseteile 11 und 21, wobei dem Gehäuseteil 11 der Gelenkansatz 10 und dem Gehäuseteil 21 der Gelenkansatz 20 zugeordnet ist. Darüber hinaus besitzt das Gehäuse 2 den mit 30 bezeichneten Druckknopf. Durch das Gelenk verläuft der mit 40 bezeichnete Bowdenzug. Zur Verständnis der Wirkungsweise der einzelnen. Bauteile des Gelenkes und hier insbesondere der einzelnen Bauteile der Verstelleinrichtung, wird insbesondere auf die Figur 5 verwiesen. So sind aus Figur 5 zunächst einmal die beiden Gehäuseteile 11 und 21 zu erkennen, die die Verstelleinrichtung aufnehmen. Die Verstelleinrichtung setzt sich im einzelnen aus den folgenden Bestandteilen zusammen: Bodenelement 50, Druckfeder 60, Kuppelglied 70 und Druckknopf 80. Der Zusammenbau der einzelnen Bestandteile 50 bis 80 der Verstelleinrichtung erfolgt wie folgt: Zunächst wird durch das eine Gehäuseteil 21 das Bodenelement 50 mit der Schnapphülse 51 aufgenommen. Die Schnapphülse 51 dient der Aufnahme und Führung der Feder 60. Auf der Feder 60 lagert das Kuppelglied 70 mit den beiden Zahnkränzen 71 und 72, die jeweils einen unterschiedlichen Durchmesser aufweisen. Auch dieses Kuppelglied wird von der Schnapphülse 51 durchragt, wobei die Schnapphülse schlußendlich bis in das andere Gehäuseteil 11 hineinragt, und dieses im Bereich des Bodenkranzes 12 formschlüssig erfaßt. Hierbei hintergreifen die Rastnasen 52 der Schnapphülse 51 einen entsprechenden Bund 17 im Bodenkranz. Zur Fixierung des. Bodenelementes 50 ist der Deckel 90 vorgesehen, der Schnappglieder 91 aufweist, die in entsprechende Ausnehmungen 22 eines Gehäuseteiles 21 hineinragen. Das andere. Gehäuseteil 11 dient der Aufnahme des Druckknopfes 80; hierbei besitzt der Druckknopf 80 zur Fixierung in dem Gehäuseteil 11 Schnappglieder 81, die korrespondierend. zu dem Schnappgliedern 91 des Deckels. 90 in entsprechende Ausnehmungen 13 einrasten. Darüber hinaus besitzt der Druckknopf 80 Druckstifte 82, die durch entsprechende Öffnungen 15 im Bodenkranz 12 des Gehäuses hindurchragend auf das Kuppelglied. wirken. Des weiteren ist zur Führung des Bautenzuges 40 die Führungshülse 100 vorgesehen, die klemmend. und verdrehsicher durch die Schnapphülse 51 aufnehmbar ist. Die Führungshülse 100 besitzt eine durchgehende Bohrung 101, die der Führung des Bowdenzuges 40 dient.

Die Funktionsweise des Gelenkes ist nun derart, daß bei Drücken des Druckknopfes 80 der konische Zahnkranz 72 aus. der im Bodenkranz des Gehäuseteiles 11 angeordneten Innenverzahnung 16 in Richtung des Pfeiles 120 entgegen der Kraft der Druckfeder 60 ausgerückt wird, so daß die Gelenkansätze 10, 20 relativ zueinander verdrehbar sind. Nach Loslassen des Druckknopfes bewegt sich das Kuppelglied 70 entgegen der Pfeilrichtung des Pfeiles 120 mit seinem konischen Zahnkranz in die Innenverzahnung 16 des Bodenkranzes 12 des Gehäuseteiles 11, wobei in dieser Stellung die beiden Gehäuseteile 11 und 21 miteinander verriegelt sind, da das Kuppelglied 70 einerseits durch den Zahnkranz 71 mit der Innenverzahnung 23. und andererseits durch den konischen Zahnkranz 72 mit der Innenverzahnung. 16 in Verbindung steht.

Sowohl die Zahnkränze 71, 72, als auch die Zähne 18, 25 der korrespondierenden Innenverzahnung weisen jeweils parallel zueinander verlaufende Flanken auf, um bei Beanspruchung eine Kraftkomponente in Richtung auf das Gehäuseteil zu. vermeiden.

## Patentansprüche

1. Gelenk (1) für den Schiebegriff eines Kleinfahrzeugs, insbesondere eines Kinderwagens, Rasenmähers und ähnlichem, wobei das Gelenk (1) zwei Gelenkansätze (10, 20) zur Verbindung einerseits mit dem Rahmen des Kleinfahrzeugs und andererseits mit dem Schiebegriff aufweist, wobei das Gelenk (1) ein Gehäuse (2) mit einer Verstelleinrichtung aufweist, durch die die Gelenkansätze (10, 20) in unterschiedlichen Stellungen zueinander rastbar fixierbar sind,
**gekennzeichnet durch**
einen Bowdenzug (40), der zentrisch in dem Gelenk (1) geführt ist und dessen Enden jeweils bei einem Gelenkansatz (10, 20) aus dem Gehäuse (2) ragen.

2. Gelenk nach Anspruch 1,
**dadurch gekennzeichnet,**
**daß** das Gehäuse (2) zwei Gehäuseteile (11, 21) aufweist, wobei jeder Gelenkansatz (10, 20) mit einem Gehäuseteil (11, 21) verbindbar ist.

3. , Gelenk nach Anspruch 2,
**dadurch gekennzeichnet,**
**daß** jedes Gehäuseteil (11, 21) im Bereich des Gelenkansatzes (10, 20) eine Öffnung für den Durchlaß des Bowdenzuges aufweist.

4. Gelenk nach Anspruch 1,
**dadurch gekennzeichnet,**
**daß** die Verstelleinrichtung eine Führungshülse (100) für den Bowdenzug (40) aufweist.

5. Gelenk nach Anspruch 4,
**dadurch gekennzeichnet,**
**daß** die Führungshülse (100) parallel und. zentrisch zur Drehachse des Gelenks (1) im Gelenk angeordnet ist.

6. Gelenk nach einem der voranstehenden Ansprüche,
**dadurch gekennzeichnet,**
**daß** die Gehäuseteile (11, 21) jeweils eine Innenverzahnung (16,23) unterschiedlichen Durchmessers aufweisen, wobei die Verstelleinrichtung zur Kupplung der beiden Gehäuseteile (11, 21) ein Kuppelglied. (70) zeigt, wobei das Kuppelglied (70) parallel zur Drehachse des. Gelenks (1) derart verschieblich ist, daß in einer ersten Stellung die beiden Gehäuseteile. (11, 21) miteinander formschlüssig verbindbar sind, und einer zweiten Stellung die beiden Gehäuseteile (11, 21) relativ zueinander verdrehbar sind.

7. Gelenk nach Anspruch 6,
**dadurch gekennzeichnet,**
**daß** das Kuppelglied (70) zwei Zahnkränze (71, 72) unterschiedlichen Durchmessers aufweist, wobei der Durchmesser der Zahnkränze mit dem jeweiligen Durchmesser der Innenverzahnung (16, 23) der Gehäuseteile (11, 21) korrespondiert.

8. Gelenk nach einem der voranstehenden Ansprüche,
**dadurch gekennzeichnet,**
**daß** die Verstelleinrichtung ein in dem einen Gehäuseteil (21) angeordnetes Bodenelement (50) aufweist, wobei das Bodenelement (50) eine Schnapphüise (51) zur Verbindung mit dem anderen Gehäuseteil (11) besitzt, wobei das Kuppelglied (70) durch die Schnapphülse (51') verschieblich führbar ist..

9. Gelenk nach Anspruch 8,
**dadurch gekennzeichnet,**
**daß** die Schnapphülse (51) der Führung einer Feder (60) dient, die zwischen Bodenelement (50) und Kuppelglied (70) angeordnet ist.

10. Gelenk nach Anspruch 8,
**dadurch gekennzeichnet,**
**daß**. die Schnapphülse (51) der Führung des Kuppelgliedes (70) dient.

11. Gelenk nach einem der voranstehenden Ansprüche,
**dadurch gekennzeichnet,**
**daß** das Bodenelement (50) durch einen Deckel (90) im Gehäuse (2) fixierbar ist.

12. Gelenk nach einem der voranstehenden Ansprüche,
**dadurch gekennzeichnet,**
**daß** das andere Gehäuseteil (11) einen Bodenkranz (12) aufweist, wobei der Bodenkranz (12) mindestens eine Öffnung (15)zeigt, und wobei der andere Gehäuseteil (11) einen Druckknopf (8) besitzt, der mindestens einen Druckstift (82) zeigt, der durch die Öffnung (15) im Bodenkranz (12) das Kuppelglied (70) entgegen der Kraft der Feder (60) außer Eingriff mit der Innenverzahnung (16) des anderen Gehäuseteiles (11) bringt.

13. Gelenk nach einem der voranstehenden Ansprüche;
**dadurch gekennzeichnet,**
**daß** die Schnapphülse (51) die Führungshülse (100) für den Bowdenzug (40) klemmend. aufnimmt.

14. Gelenk nach einem der voranstehenden Ansprüche,
**dadurch gekennzeichnet,**
**daß** die Schnapphülse (51) Führungshülse (100) verdrehsicher aufnimmt.

15. Gelenk nach einem der voranstehenden Ansprüche,
**dadurch gekennzeichnet,**
**daß** die Verzahnung der Zahnkränze (71, 72) des Kuppelgliedes (70) und korrespondierend hierzu die Innenverzahnung (16, 23) der Gehäuseteile (11, 21) Zähne mit parallel zueinander verlaufenden Zahnflanken aufweist.

16. Kleinfahrzeug, z. B. Kinderwagen oder Rasenmäher
**gekennzeichnet durch** ein Gelenk gemäß einem oder mehrerer der voranstehenden Ansprüche 1 bis 15.

## Claims

1. Articulation (1) for the pushing handlebar of a small vehicle, more particularly of a pram, a lawn-mower and the like, whereas the articulation (1) is provided with two projections (10, 20) used for connection with the frame of the small vehicle on one hand and: with the pushing handlebar on the other, whereas the articulation (1) is showing a housing (2) fitted with an adjusting device thanks to which the. projections (10, 20) of the articulation may be locked into variable positions relative to each other,
**characterized by** a Bowden cable (40) which is guided centrically in the articulation (1), and whose ends are projecting out of the housing (2), one on each projection.

2. Articulation according to claim 1,
**characterized in that** the housing (2) is provided with two housing parts (11, 21), whereas each projection (10, 20) is connectable with a housing part (11, 21).

3. Articulation according to claim 2,
**characterized in that** each housing part (11, 21) is provided in the area of the projection (10, 20) with an opening through which the Bowden cable may be passed.

4. Articulation according to claim 1,
**characterized in that** the adjusting device is provided with a guide bush (100) for the Bowden cable (40).

5. Articulation according to claim 4,
**characterized in that** the guide bush (100) is arranged parallel and centrically to the rotation axis of the. articulation (1) in the articulation.

6. Articulation according to claim 2,
**characterized in that** the housing parts (11, 21) are each provided with an internal gear (16, 23) of differing diameter, whereas the adjusting device used for coupling the two housing parts. (11, 21) shows a coupling member (70), whereas the coupling member (70) is slidable parallel to the rotation axis of the articulation (1) in such a way that, in a first position, the two housing parts (11, 21) may be positively interlocked and. that, in a second position, the two housing parts (11, 21) may be twisted relative to each other.

7. Articulation according to claim 6,
**characterized in that** the coupling member (70) is. provided with two gear rims (71, 72) of differing diameter, whereas the diameter of each gear rim fits the corresponding diameter of the internal gear (16, 23) in the housing parts (11, 21).

8. Articulation according to claim 1,
**characterized in that** the adjusting device shows a bottom element (50) arranged in one of the housing parts (21), whereas the bottom element (50) possesses a snap-in case (51) for its connection with the other housing part (11), whereas the coupling member (70) may slidably be guided. by the snap-in case (51).

9. Articulation according. to claim 8,
**characterized in that** the snap-in case (51) serves to guide a spring (60) arranged between bottom element (50) and coupling member (70).

10. Articulation according-to claim 8,
**characterized in that** the snap-in case (51) serves to guide the coupling member (70).

11. Articulation according to claim 8,
**characterized in that** the bottom element (50) is fastenable in the housing by means of a cover (90).

12. Articulation according to claim 2,
**characterized in that** the other housing part (11) advantageously shows a bottom rim (12), whereas the bottom rim (12) is provided with at least one opening (15), and whereas this other housing part. (11) is provided with a push-button (8) having at least one push-pin (82) which, against the spring's (60) force, disengages the coupling member (70) from the internal gear (16) of the other housing part (11) through the opening (15) in the bottom rim (12).

13. Articulation according. to claim 8,
**characterized in that** the snap-in case (51) is: clampingly receiving the guide bush (100) for the Bowden cable. (40).

14. Articulation according to claim 14,
**characterized in that** the snap-in case (51) is receiving the guide bush (100) so as to protect it from distortion.

15. Articulation according to claim 7,
**characterized in that** the gear cutting of the coupling member's (70) gear rims (71, 72) and correspondingly the internal gear (16, 23) of the housing parts (11, 21) are provided. with teeth whose profile is running parallel to each other.

16. Small vehicle, e.g. pram or lawn-mower,
**characterized by** an articulation according to one or several of the previous claims 1 to 15.

## Revendications

1. Articulation (1) pour le guidon d'un petit véhicule, plus particulièrement d'un landau, d'une tondeuse à gazon ou autre véhicule du même genre, l'articulation (1) étant pourvue de deux embases (10, 20) permettant la connection d'une part avec le cadre du petit véhicule et d'autre. part avec le guidon, l'articulation (1) ayant un boîtier (2) avec un variateur grâce auquel les embases (10, 20) peuvent être fixées par arrêt dans différentes positions l'une par rapport à l'autre,
**caractérisée en ce qu'**un câble Bowden (40) est guidé de façon centrique dans l'articulation (1) et que ses extrémités. dépassent de chaque côté du boîtier (2) à l'endroit des embases (10, 20).

2. Articulation selon la revendication 1,
**caractérisée en ce que** le boîtier (2) consiste en deux parties de boîtier (11, 21), chaque embase (10, 20) pouvant être reliée à une partie de boîtier (11, 21).

3. Articulation selon la revendication 2,
**caractérisée en ce que** chaque partie de boîtier (11, 21) est pourvue, dans l'entourage de l'embase (10, 20), d'une ouverture permettant le passage du câble Bowden.

4. Articulation selon la. revendication 1,
**caractérisée en ce que** le variateur est pourvu d'une douille de guidage (100) pour le câble Bowden.

5. Articulation selon la revendication 4,
**caractérisée en ce que** la douille de guidage (100) est placée dans l'articulation parallèlement à l'axe de rotation de l'articulation (1) et: au centre de celle-ci.

6. Articulation selon l'une des revendications précédentes,
**caractérisée en ce que** les parties de boîtier (11, 21) sont chacune pourvues d'un engrenage intérieur (16, 23) de diamètre différent, le variateur étant doté d'un membre d'accouplement (70) permettant d'accoupler les deux parties de boîtier (11, 21), le membre d'accouplement (70) étant mobile en parallèle par rapport à l'axe de rotation de l'articulation (1) de sorte que, dans une première position, les deux parties de boîtier (11, 21) peuvent être assemblées par accouplement rigide et que, dans une seconde position, les deux parties de boîtier (11, 21) sont pivotables l'une par rapport à l'autre.

7. Articulation selon la revendication 6,
**caractérisée en ce que** le membre d'accouplement (70) possède deux couronnes dentées (71, 72) de différents diamètres, le diamètre. de chaque couronne dentée équivalant au diamètre correspondant de l'engrenage intérieur (16, 23) des parties de boîtier (11, 21).

8. Articulation selon l'une des revendications précédentes,
**caractérisée en ce que** le variateur est pourvu d'un élément de fond (50) placé dans l'une des parties de boîtier (21), ledit élément de fond (50) possédant une douille à déclic (51) permettant l'assemblage avec l'autre partie de boîtier (11), le membre d'accouplement (70) pouvant être guidé de façon mobile par la douille à déclic (51).

9. Articulation selon la revendication 8,
**caractérisée en ce que** la douille à déclic (51) sert à guider un ressort (60) placé entre l'élément de fond (50) et le membre d'accouplement (70).

10. Articulation selon la revendication 8,
**caractérisée en ce que** la douille à déclic (51) sert à guider le membre d'accouplement (70).

11. Articulation selon l'une des revendications précédentes,
**caractérisée en ce que** l'élément de fond (50) peut être fixé dans le boîtier (2) par un couvercle (90).

12. Articulation selon l'une des revendications précédentes,
**caractérisée en ce que** l'autre partie de boîtier (11) est pourvue d'une couronne de fond (12), ladite couronne de fond. (12) arborant au moins une ouverture (15), et l'autre partie de boîtier (11) possédant un bouton-poussoir (8) arborant au moins une goupille de pression (82), celle-ci supprimant la liaison entre le membre d'accouplement (70) et l'engrenage intérieur (16) de l'autre partie de boîtier (11) à l'encontre de la force exercée par le ressort en passant par l'ouverture (15) dans la couronne de fond.

13. Articulation selon l'une des revendications précédentes,
**caractérisée en ce que** la douille à déclic (51) reçoit la douille de guidage (100) pour le câble Bowden (40) par serrage.

14. Articulation selon l'une des revendications précédentes,
**caractérisée en ce que** la douille à déclic (51) reçoit la douille de guidage (100) de façon à ce qu'elle ne puisse pas se tordre.

15. Articulation selon l'une des revendications précédentes,
**caractérisée en ce que** l'engrenage des couronnes dentées (71, 72) du membre d'accouplement (70) et l'engrenage intérieur (16, 23) correspondant des parties de boîtier (11, 21) sont pourvus de flancs de dent parallèles.

16. Petit véhicule, p. ex. landau ou tondeuse à gazon,
**caractérisé par** une articulation selon une ou plusieurs des revendications précédentes 1 à 15.
